Europäisches Patentamt

**European Patent Office**

Office européen des brevets

(19)

(11) Numéro de publication: **0 009 439**
**B1**

(12) # FASCICULE DE BREVET EUROPEEN

(45) Date de publication du fascicule du brevet: **05.05.82**

(51) Int. Cl.³: **B 60 N 1/12**

(21) Numéro de dépôt: **79400634.6**

(22) Date de dépôt: **10.09.79**

(54) **Siège de sécurité pour le transport d'un enfant dans un véhicule automobile.**

(30) Priorité: **11.09.78 FR 7826041**
**21.09.78 FR 7827039**
**13.06.79 FR 7915156**

(43) Date de publication de la demande:
**02.04.80 Bulletin 80/7**

(45) Mention de la délivrance du brevet:
**05.05.82 Bulletin 82/18**

(84) Etats contractants désignés:
**AT BE CH DE GB IT LU NL SE**

(56) Documents cités:
**FR - A - 2 019 746**
**FR - A - 2 190 005**
**GB - A - 1 085 217**
**US - A - 2 947 350**

(73) Titulaire: **BABY RELAX Société anonyme dite:**
**Route du B.A.B.**
**F-64600 Anglet (FR)**

(72) Inventeur: **Deloustal, Bernard Roger**
**181, Avenue de l'Adour**
**F-64600 Anglet (FR)**

(74) Mandataire: **Robert, Jean-Pierre et al,**
**CABINET BEAU DE LOMENIE 55, rue**
**d'Amsterdam**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Siège de sécurité pour le transport d'un enfant dans un véhicule automobile

On connaît des dispositifs destinés à recevoir un enfant pour son maintien dans un véhicule automobile. Ce maintien doit être assuré dans des conditions de confort et surtout de sécurité qui ont fait l'objet d'une réglementation récente assortie de tests et d'essais. Ainsi, tous les dispositifs destinés à assurer le maintien d'un enfant dans un véhicule automobile doivent satisfaire aux exigences de cette réglementation. Compte tenu de la sévérité de ces exigences, les dispositifs connus de ce type, ont été uniquement conçus dans la seule optique "sécurité", pour obtenir l'homologation indispensable à leur commercialisation. Cette conception, orientée par un souci de robustesse et de maintien efficace de l'enfant, a conduit à un style de siège monocoque, c'est-à-dire d'un seul tenant, arrimé par sangle aux points d'ancrage prévus sur les véhicules. On voit que de tels dispositifs sont très spécialisés et donc mal adaptés à de multiples usages. C'est ainsi qu'il a fallu concevoir d'autres dispositifs pour répondre au besoin de transport en sécurité d'enfants en très bas âge ne pouvant être maintenus assis dans un support.

Or, l'une des qualités assentielles d'un article de puériculture est de pouvoir suivre la croissance rapide des enfants.

La présente invention entendant concilier les exigences impératives de la réglementation susdite et les qualités de transformation ou d'adaptation que doit présenter un article de puériculture, concerne une structure de support transformable pour le transport d'un enfant en véhicule automobile rompant avec les conceptions actuelles selon lesquelles, il ne peut y avoir de sécurité qu'au moyen d'une structure "monolithique".

Ainsi, l'objet de l'invention est un siège inclinable de sécurité pour supporter et maintenir un enfant, destiné à être ancré dans un véhicule automobile au moyen de deux sangles susceptibles d'être respectivement tendues entre un point de fixation dont est pourvu le véhicule et un point d'ancrage porté par le siège, l'extrémité de chaque sangle étant pourvue d'une patte pour sa liaison au point d'ancrage, le dossier et l'assise, comportant des rebords latéraux, étant articulés par l'une de leurs extrémités.

Selon l'une des caractéristiques principales de l'invention le dossier et l'assise sont chacun constitués par une demi-coque présentant la forme générale d'une auge dont les rebords latéraux sont épais, en ce que le point d'ancrage susdit est placé dans l'un des rebords susdits au voisinage de l'articulation; la patte de liaison susdite comporte des moyens d'attelage rigides du rebord correspondant au dossier avec le rebord correspondant de l'assise pour au moins deux positions d'ouverture maximale et minimale du siège, la fixation de ladite patte audit point d'ancrage ne pouvant être réalisée que lorsque les moyens d'attelage susdits sont mis en oeuvre et verrouillent l'ouverture du siège dans au moins les deux positions d'ouverture susdites.

Selon un mode préféré de réalisation de l'invention, les moyens d'attelage susdits sont constitués par une biellette solidaire de la patte de liaison susceptible de s'étendre en recouvrement latéral des parties adjacentes des rebords du dossier et de l'assise, des éléments de brochage de la biellette sur lesdits rebords étant prévus en correspondance sur la biellette et lesdits rebords lorsque le siège est au moins dans chacune de ses deux positions d'ouverture minimale et maximale susdites.

Plus précisément, lesdits éléments de brochage sont constitués par une broche perpendiculaire à ladite biellette prévue à l'une de ses extrêmités et par un orifice ménagé dans ladite biellette à son autre extrêmité et par au moins deux orifices prévus sur la partie voisine de l'articulation d'un des rebords susdits et par une broche solidaire du second rebord et perpendiculaire à ce dernier.

Il sera avantageux de prévoir la broche solidaire dudit rebord fileté pour constituer l'un des éléments de fixation de la patte de liaison susdite sur le siège. Elle sera alors située au point d'ancrage susdit.

Le siège selon l'invention doit par ailleurs comporter des moyens de blocage de l'inclinaison relative des deux demi-coques, dans n'importe quelle position comprise entre les deux positions d'ouverture minimale et maximale susdites. A cet effet, et dans l'optique de l'invention c'est-à-dire d'un siège de sécurité ne devant pas présenter de zones affaiblies, la partie située au voisinage de l'articulation de chaque rebord latéral d'une demi-coque présente un bec susceptible d'être plus ou moins introduit dans une échancrure correspondante ménagée dans la partie située au voisinage de l'articulation de chaque rebord latéral de l'autre demi-coque selon le degré d'inclinaison relative des demi-coques, lesdits moyens de blocage de l'inclinaison relative des demi-coques étant consitués par deux flancs solidaires de chacun des rebords échancrés et bordant latéralement chaque échancrure et par des organes de serrage desdits flancs sur la partie dudit bec engagée dans l'échancrure.

De manière préférée, chaque organe de serrage susdit est constitué par un boulon dont la vis solidaire de l'un des flancs porte en extrêmité un écrou bouton de serrage et traverse le bec susdit par le moyen d'une lumière en arc de cercle centrée sur l'axe de l'articulation, dans ce cas ladite vis constitue avantageusement, avec l'écrou, ladite broche et ledit élément de fixation de la patte de liaison susdite.

En outre, l'un des orifices susdits prévu dans les rebords est constitué par une extrêmité de la lumière en arc de cercle susdite.

Le siège pourra également présenter un troisième orifice pour le verrouillage de l'inclinaison du dossier dans une position intermédiaire entre les deux positions d'ouverture minimale et maximale susdites.

Enfin on aura prévu que ladite broche filetée soit d'une longueur au plus égale à la longueur de la broche portée par la biellette.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels:

— la figure 1 est une vue générale d'un mode de réalisation du siège selon l'invention, indépendamment de son système d'ancrage.

— La figure 2 illustre par une vue en élévation latérale, un détail de la figure 1.

— La figure 3 illustre le système d'ancrage du siège de la figure 1 dans sa position d'ouverture minimale.

— La figure 4 illustre ce même système dans la position d'ouverture maximale du siège.

— La figure 5 montre une variante de réalisation des figures 3 et 4 dans laquelle un ancrage du siège en position d'inclinaison intermédiaire verrouillable est possible.

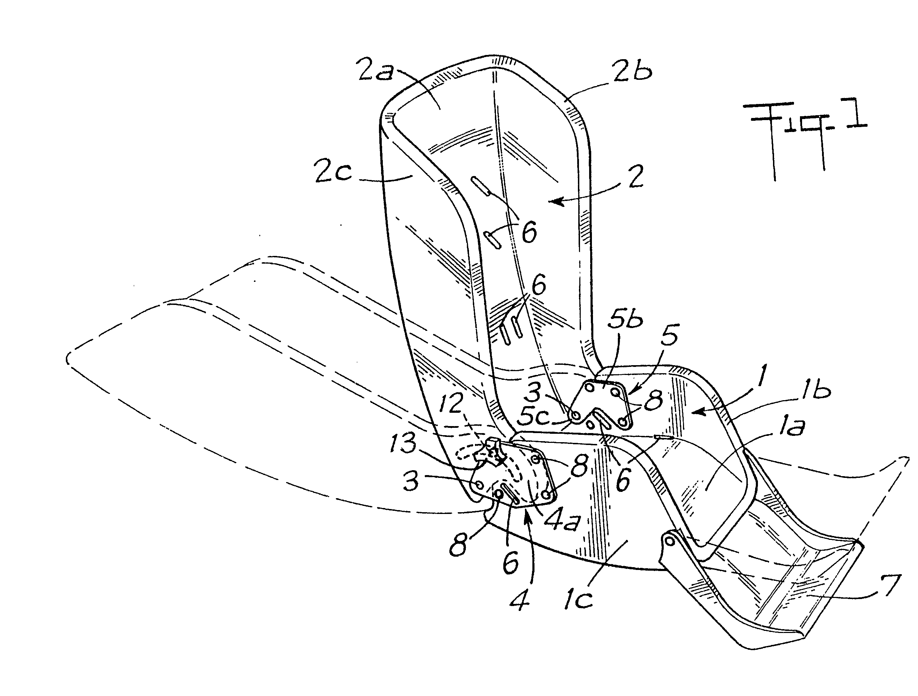

En se reportant tout d'abord à la figure 1, on voit un siège pour enfant destiné à être ancré dans un véhicule automobile. Ce siège comporte deux demi-coques 1 et 2, en forme pour chacune d'elles d'auge, c'est-à-dire possédant un fond 1a, 2a et des rebords latéraux 1b, 1c, 2b, 2c présentant une épaisseur notable. Ces demi-coques sont réalisées en matériau synthétique semi-rigide.

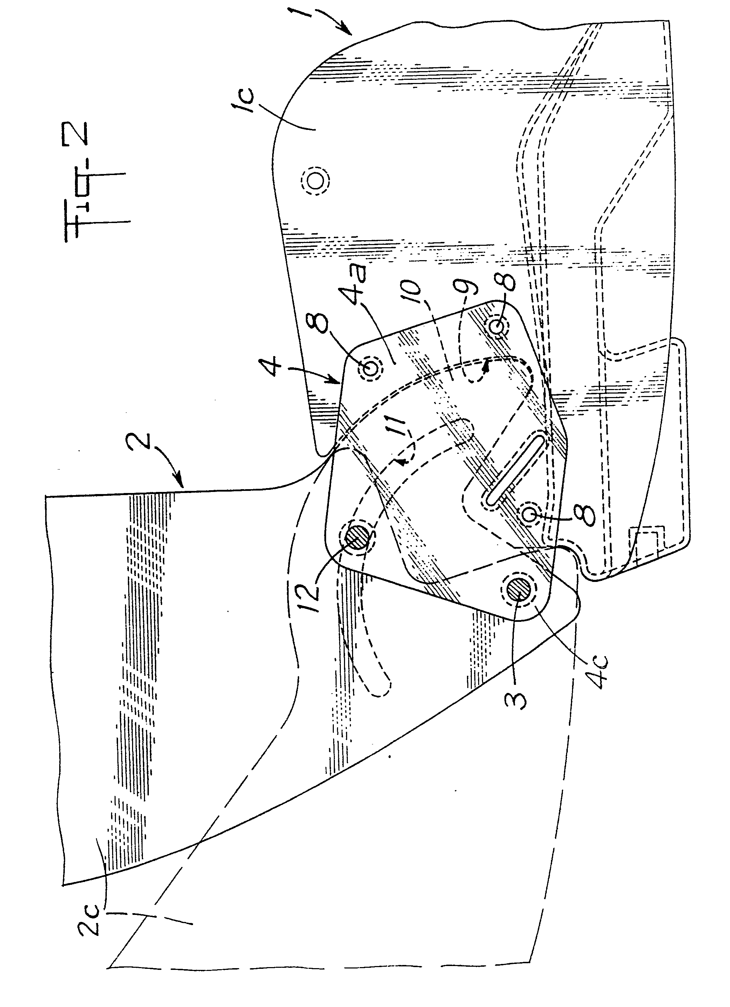

Ces deux demi-coques sont articulées l'une à l'autre au moyen d'une de leurs extrêmités, autour d'axes repérés 3 sur la figure 1. Cette articulation sera décrite plus en détail en regard de la figure 2. Autour de cette articulation, l'inclinaison relative des demi-coques 1 et 2 peut être quelconque entre deux positions limites représentées l'une en trait plein, l'autre en trait mixte sur la figure. La première position susdite correspond à la conformation en siège proprement dit dans laquelle la demi-coque 2 forme le dossier du siège incliné d'un angle minimal légèrement obtus par rapport à l'assise du siège (demi-coque 1). La seconde position correspond à la conformation du siège en lit pour nourrisson ou bébé dans laquelle la demi-coque 2 forme un angle maximal sensiblement plat avec la demi-coque 1.

Le siège selon l'invention présente également des moyens d'immobilisation relative des deux demi-coques 1 et 2 dans l'une quelconque de leur position. Ces moyens référencés 4 et 5 sur la figure 1 seront explicités en détail en regard de la figure 2 qui représente un mode préféré de leur réalisation.

On notera également la présence de fentes 6 dans les demi-coques pour le passage des différentes sangles d'arrimage et de maintien de l'usager dans le siège. Enfin, le siège représenté est équipé d'un repose pieds 7 articulé à l'autre extrêmité de la demi-coque 1 et attelé de manière connue, à l'autre demi-coque 2 par un embiellage non représenté assurant le relevage du repose pieds en même temps que l'ouverture de la structure.

La figure 2 montre par une vue partielle latérale, l'un des moyens 4, 5 décrits ci-dessus ainsi que l'articulation des demi-coques l'une sur l'autre.

On constate, en se reportant aux figures 1 et 2 que chacun des rebords 1c, 1b est équipé au voisinage de l'articulation 3 de deux flancs, l'un extérieur tel 4a (non visible pour le moyen 5) et l'autre intérieur tel que 5b (non visible pour le moyen 4). Ces deux flancs bordent donc latéralement l'extrêmité de chaque rebord et y sont fixés au moyen de rivets ou analogues 8. Entre ces deux flancs, chaque rebord 1b, 1c est échancré selon une ouverture 9 de manière à définir un logement en forme de chape.

Chacun des rebords 2b et 2c de l'autre demi-coque est pourvu au voisinage de l'articulation 3 d'un bec 10 de forme complémentaire à celle du logement 9 susceptible d'être plus ou moins engagé dans ledit logement selon la valeur de l'inclinaison relative des deux demi-coques. Ce bec est pourvu d'une lumière circulaire 11 de passage en son travers d'un organe de rapprochement des flancs l'un contre l'autre donc de serrage du bec entre ceux-ci. Cet organe peut être constitué par une tige filetée 12 passant dans la lumière 11, immobilisée par exemple sur le flanc intérieur et débouchant au-delà du flanc extérieur de manière à constituer un support pour un écrou de serrage se présentant sous la forme d'un bouton de manoeuvre 13.

Il faut noter en outre, en regard de ces figures, que l'articulation des demi-coques est réalisée en fait entre une prolongation telle que 4c et 5c des flancs de chacun des rebord 1b, 1c et une partie extrême inférieure des rebords 2b et 2c s'étendant entre ces prolongations, l'ensemble étant traversé par l'axe 3 correspondant, fixé par exemple aux prolongations desdits flancs.

Sur la figure 2, on a représenté en traits pleins le siège dans sa position d'ouverture minimale. On voit que le bec 10 est complètement engagé et s'emboîte parfaitement dans l'échancrure 9. Le serrage des flancs s'effectue donc sur une grande surface du bec, ce qui permet de créer des forces de frottement importantes et régulièrement réparties. Pour ce faire, on aura choisi des flancs relativement souples et cependant très résistants (certaines matières plastiques correspondent bien à ces caractéristiques). Le frottement est avantageusement amélioré par la conformation "granitée" de la peau des demi-coques et donc du bec 10. Ainsi, le siège se présente sous forme d'un solide d'égale résistance sans discontinuité dans lequel, à la manière des sièges monocoques connus, il n'y a aucun point faible qui constituerait une faiblesse du siège interdisant son utilisation comme dispositif de sécurité.

Dans sa position d'ouverture maximale, représentée en traits mixtes sur la figure 2, la demi-coque 2 est placée pratiquement dans l'alignement de la demi-coque 1. Le bec 10 de chaque rebord 2b et 2c reste encore engagé partiellement dans le logement 9 et peut être serré entre les flancs susdits au moyen de l'organe 12, 13. Dans cette configuration, le siège se présente sous la forme d'un lit pour nourrisson offrant les caractéristiques de rigidité nécessaires pour satisfaire aux exigences des normes en vigueur pour ce type d'article. En outre, il permet facilement l'adjonction d'un filet anti-éjection, pouvant se présenter par exemple, sous la forme d'une chaussette coiffant la totalité du lit. On remarquera à ce propos, l'importance qu'il y a à prévoir des rebords 1b, 1c, 2b, 2c, suffisamment hauts, pour qu'entre le fond 1a, 2a du lit et le filet susdit, il soit préservé un espace suffisant pour installer confortablement le nourrisson.

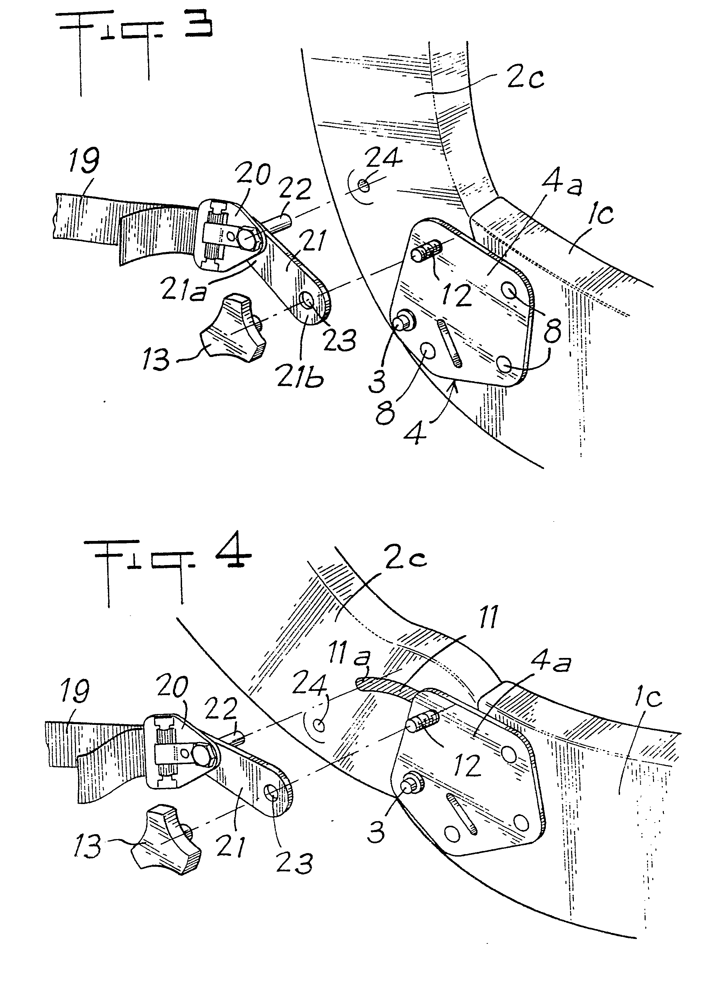

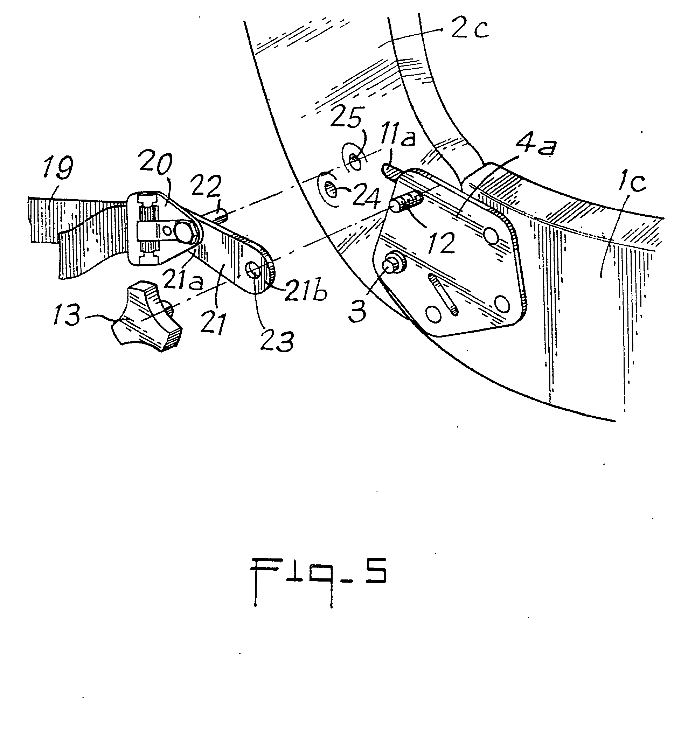

Sur les figures 3 et 4 est représentée une sangle de fixation 19 due siège, dont une extrêmité non représentée est attelée à un point de fixation dont est pourvu le véhicule automobile et dont l'autre extrêmité est équipée d'une patte de liaison 20 pour son attache au siège. Cette patte 20 comporte une partie 21 en forme de biellette qui, dans l'exemple représenté est articulée sur la patte 20 autour d'une broche 22, par l'une de ses extrêmités 21a. Son autre extrêmité 21b est pourvue d'un orifice 23. Ladite biellette 21 est de longueur suffisante pour venir en recouvrement latéral des extrêmités adjacentes des bords 1c et 2c de l'assise 1 et du dossier 2 du siège.

Sur ces figures, on ne voit qu'un dispositif 4d' immobilisation en inclinaison du dossier 2 par rapport à l'assise 1. On retrouve, avec les mêmes références les éléments constitutifs de ce dispositif décrits précédemment.

On notera que la longueur de la partie extérieure latérale de la vis 12 est au plus égale à la longueur de la broche 22.

Enfin, le bord 2c du dossier est pourvu d'un orifice 24, destiné à recevoir la broche 22 de la manière décrite ci-après.

Lorsque l'on veut atteler le siège de la figure 1 à un véhicule automobile au moyen de deux sangles telles que 19 disposées de part et d'autre du siège dans sa position d'ouverture minimale (figure 3), il convient d'engager la broche 22 dans l'orifice 24 et simultanément l'orifice 23 sur la tige filetée 12. Cette opération est possible car l'orifice 24 est ménagé dans le rebord 2c de manière telle qu'en position d'ouverture minimale, la distance le séparant de la vis 12 est identique à celle séparant la broche 22 de l'orifice 23. On voit qu'ainsi la biellette 21 constitue un organe de verrouillage en inclinaison du dossier par rapport à l'assise. Pour maintenir ce dispositif en place et ainsi atteler la sangle 19 au siège, il suffit de placer le bouton de serrage 13 sur la vis 12.

Dans le cas où l'on désire fixer le siège dans sa position d'ouverture maximale, afin d'en faire un lit (figure 4), la longueur de la lumière 11 est telle que la broche 22 peut s'y engager à son extrêmité 11a lorsque son autre extrêmité est en butée contre la vis 12. L'orifice 23 étant alors placé sur ladite vis, la biellette 21 constitue également organe de verrouillage du dossier par rapport au siège.

En se référant enfin à la figure 5 on voit qu'un orifice 25 est prévu entre l'extrêmité 11a de la lumière 11 et l'orifice 24 pour recevoir la broche 22 dans une position d'ouverture intermédiaire entre celles représentées sur les figures précédentes. Une telle position peut en effet présenter des avantages en ce qu'elle augmente le confort de l'enfant qui est ainsi à demi allongé dans son siège.

Dans toutes les autres positions d'inclinaison du dossier 2 par rapport à l'assise 1, il est impossible de mettre en place la patte de liaison 20, la biellette 21 et le bouton 13. En effet, si l'on introduit la vis 12 sur l'orifice 23, la broche 22 qui est au moins aussi longue que la vis prend appui sur le rebord 2c et l'utilisateur s'aperçoit rapidement des difficultés qu'il éprouve à serrer le bouton 13. En outre, si la broche 22 est introduite dans les orifices 24, 25 ou dans la lumière 11, il n'y a pas de correspondance possible entre l'orifice 23 et la vis 12.

Le fait enfin d'avoir confondu les moyens de réglage de l'inclinaison du dossier et les moyens de fixation de la patte de liaison 20, oblige à débloquer l'inclinaison du dossier pour fixer le siège dans la voiture. Il s'ensuit que tout naturellement, en cherchant à atteler la sangle au siège, ce dernier est placé dans l'une des positions permises pour le transport de sécurité de l'enfant.

Le siège selon l'invention, notamment par la conception de ses moyens de blocage et de verrouillage des deux demi-coques offre l'avantage de pouvoir satisfaire aux normes de sécurité en vigueur, relatives aux lit et siège d'enfants pour leur transport en véhicule automobile. Bien entendu, un tel siège peut recevoir de multiples accessoires tels qu'un piètement, une tablette, des poignées de transport et des moyens pour sa fixation dans ses deux positions sur un chassis de poussette qui augmente de façon importante ses possibilités d'usage. Elle est ainsi le noyau central et permanent d'une gamme d'articles de puériculture différents pouvant satisfaire de façon économique les besoins de la clientèle.

L'invention n'est pas limitée à la description qui vient d'en être donnée mais couvre au contraire toutes les variantes qui pourraient lui être apportées sans sortir de son cadre ni de son esprit. C'est ainsi que l'on peut prévoir que la partie 21 de la patte de liaison 20 soit en une seule pièce avec cette dernière. En outre, les broches et orifices peuvent être portés de manière inverse par le rebord 2c et la patte de liaison. On peut également prévoir deux autres broches sur le rebord 1c de l'assise pour coopérer avec l'orifice 23, respectivement dans chacune des positions d'ouverture du siège. Les moyens de fixation de la sangle au siège peuvent être également prévus de manière séparée des moyens de blocage de l'inclinaison du dossier. On peut par exemple les disposer à l'endroit de la broche 22 ou au milieu de la biellette pourvue alors d'un ou plusieurs orifices permettant la fixation dans ses deux positions de brochage. Toutes ces réalisations possibles doivent cependant être telles que la fixation de la sangle au siège n'est rendue possible que, s'il y a brochage de la biellette sur les deux parties du siège. On pourra prévoir à cet effet, une vis de fixation plus courte que les broches de manière que cette dernière ne puisse pas traverser la biellette si les broches ne sont pas reçues par les orifices correspondants.

L'invention trouve une application intéressante dans le domaine des articles de puériculture.

## Revendications

1. Siège inclinable de sécurité pour supporter et maintenir un enfant, destiné à être ancré dans un véhicule automobile au moyen de deux sangles susceptibles d'être respectivement tendues entre un point de fixation dont est pourvu le véhicule et un point d'ancrage porté par le siège, l'extrêmité (19) de chaque sangle étant pourvue d'une patte (20) pour sa liaison au point d'ancrage, le dossier (2) et l'assise (1) comportant des rebords latéraux (2b, 2c, 1b, 1c), étant articulés par l'une de leurs extrêmités, Caractérisé en ce que le dossier (2) et l'assise (1) sont chacun constitués par une demi-coque présentant la forme générale d'une auge ayant des rebords latéraux (2b, 2c, 1b, 1c), en ce que le point d'ancrage susdit est placé dans l'un des rebords susdits au voisinage de l'articulation et en ce que la patte de liaison (20) susdite comporte des moyens d'attelage rigides du rebord correspondant du dossier avec le rebord correspondant de l'assise pour au moins deux positions d'ouverture maximale et minimale du siège, la fixation de ladite patte (20) audit point d'ancrage ne pouvant être réalisée que lorsque les moyens d'attelage susdits sont mis en oeuvre et verrouillent l'ouverture du siège dans au moins les deux positions d'ouverture susdites.

2. Siège selon la revendication 1 caractérisé en ce que les moyens d'attelage susdits sont constitués par une biellette (21) solidaire de la patte de liaison (20) susceptible de s'étendre en recouvrement latéral des parties adjacentes des rebords du dossier (2b, 2c) et de l'assise (1b, 1c), des éléments de brochage (11, 12, 22, 23, 24) de la biellette sur lesdits rebords étant prévus en correspondance sur la biellette (21) et lesdits rebords (2b, 2c, 1b, 1c) lorsque le siège est au moins dans chacune de ses deux positions d'ouverture minimale et maximale susdites.

3. Siège selon la revendication 2 caractérisé en ce que lesdits éléments de brochage (11, 12, 22, 23, 24) sont constitués par une broche (22) perpendiculaire à ladite biellette (21) prévue à l'une de ses extrêmités et par un orifice (23) ménagé dans ladite biellette à son autre extrêmité et par au moins deux orifices (24, 11) prévus sur la partie voisine de l'articulation d'un des rebords susdits (2c) et par une broche (12) solidaire du second rebord (1c) et perpendiculaire à ce dernier.

4. Siège selon la revendication 3 caractérisé en ce que la broche (12) solidaire dudit rebord (1c) est filetée et constitue l'un des éléments de fixation de la patte de liaison (20) susdite sur le siège et est située au point d'ancrage susdit.

5. Siège selon la revendication 4 caractérisé en ce que la partie située an voisinage de l'articulation de chaque rebord latéral d'une demi-coque (1, 2) présente un bec (10) susceptible d'être plus ou moins introduit dans une échancrure (9) correspondante ménagée dans la partie située au voisinage de l'articulation de chaque rebord latéral (2b, 2c, 1b, 1c) de l'autre demi-coque selon le degré d'inclinaison relative des demi-coques en ce que des moyens de blocage de l'inclinaison relative des demi-coques sont constitués par deux flancs (4a, 5b) solidaires de chacun des rebords échancrés et bordant latéralement chaque échancrure et par des organes de serrage desdits flancs sur la partie dudit bec engagée dans l'échancrure, chaque organe de serrage susdit étant constitué par un boulon dont la vis (12) solidaire de l'un des flancs (1c) porte en extrémité un écrou bouton de serrage (13) et traverse le bec (10) susdit par le moyen d'une lumière en arc de cercle (11a) centrée sur l'axe (3) de l'articulation, et en ce que ladite vis (12) constitué, avec l'écrou (13), ladite broche et ledit élément de fixation de la patte de liaison (20) susdite.

6. Siège selon l'une quelconque des revendications 4 et 5 caractérisé en ce que ladite broche filetée (12) est d'une longueur au plus égale à longueur de la broche (22) portée par la biellette (21).

7. Siège selon la revendication 5 caractérisé en ce que l'un des orifices susdits prévu dans les rebords (2b, 2c) est constitué par une extrêmité de la lumière (11a) en axe de cercle susdite.

8. Siège selon la revendication 7 caractérisé en ce qu'il présente un troisième orifice (25) pour le verrouillage de l'inclinaison du dossier dans une position intermédiaire entre les deux positions d'ouverture minimale et maximale susdites.

9. Siège selon la revendication 5 caractérisé en ce que l'axe d'articulation (3) des deux demi-coques est en deux parties, chacune d'elles traversant des prolongations (4c, 5c) inférieures des flancs susdits et une partie de chaque rebord de l'autre demi-coque placée entre lesdites prolongations.

**Patentansprüche**

1. Neigbarer Sicherheitssitz zum Stützen und Festhalten eines Kindes, der zur Verankerung in einem Automobil mittels zweier Gurten bestimmt ist, welche zwischen einem Befestigungspunkt im Auto und einem Verankerungspunkt im Sitz gespannt werden können, wobei das Ende (19) jedes Gurtes mit einer Klemme (20) zur Verbindung desselben im Verankerungspunkt versehen ist und die seitliche Randleisten (2b, 2c, 1b, 1c) aufweisende Rücklehne (2) und Grundplatte (1) an einem ihrer Enden angelenkt sind, dadurch gekennzeichnet, daß die Rücklehne (2) und die Grundplatte (1) jeweils aus einer Halbschale von im allgemeinen Trogform mit seitlichen Randleisten (2b, 2c, 1b, 1c) gebildet sind, daß sich der Verankerungspunkt auf einer der Randleisten nahe der gelenkigen Verbindung befindet und daß die Verbindungsklemme (20) starre Mittel zum Zusammenkuppeln der entsprechenden Randleiste der Rücklehne mit der entsprechenden Randleiste der Grundplatte für zumindest zwei Maximal-bzw. Minimalöffnungspositionen des Sitzes umfaßt, wobei die Befestigung der Klemme (20) am Verankerungspunkt nur dann realisierbar ist, wenn die Kupplungsmittel betätigt worden sind und die Öffnung des Sitzes in zumindest diesen beiden Öffnungspositionen verriegeln.

2. Sitz nach Anspruch 1, dadurch gekennzeichnet, daß die Kupplungsmittel durch einen zur Verbindungsklemme (20) gehörigen Schwingarm (21) gebildet sind, welcher sich in seitlicher Überdeckung der aneinandergrenzenden Randleisten der Rücklehne (2b, 2c) und der Grundplatte (1b, 1c) erstreckt, wobei die Elemente zur Befestigung (11, 12, 22, 23, 24) des Schwingarms auf den Randleisten in einander entsprechender Weise auf dem Schwingarm (21) und den Randleisten (2b, 2c, 1b, 1c) vorgesehen sind, wenn sich der Sitz in zumindest jeweils einer der beiden Minimal-bzw. Maximalöffnungspositionen befindet.

3. Sitz nach Anspruch 2, dadurch gekennzeichnet, daß die Befestigungselemente (11, 12, 22, 23, 24) einen senkrecht zum Schwingarm (21) verlaufenden und an einem seiner Enden vorgesehenen Dorn (22) und eine am anderen Ende des Schwingarms vorgesehene Öffnung (23) sowie zumindest zwei auf dem der Anlenkung benachbarten Teil einer der Randleisten (2c) vorgesehene Öffnungen (24, 11) und einen zur zweiten Randleiste (1c) gehörigen bzw. senkrecht zu letzterer verlaufenden Dorn (12) umfassen.

4. Sitz nach Anspruch 3, dadurch gekennzeichnet, daß der zur Randleiste (1c) gehörige Dorn (12) mit einem Gewinde versehen ist und eines der Elemente zur Befestigung der Verbindungsklemme (20) auf dem Sitz bildet und am Verankerungspunkt angeordnet ist.

5. Sitz nach Anspruch 4, dadurch gekennzeichnet, daß der der Anlenkung benachbarte Teil jeder seitlichen Randleiste jeder Halbschale (1, 2) einen Schnabel (10) aufweist, der in einen entsprechenden, auf dem der Anlenkung benachbarten Teil jeder seitlichen Randleiste (2b, 2c, 1b, 1c) der anderen Halbschale vorgesehenen bogenförmigen Ausschnitt (9) je nach Neigungsgrad der beiden Halbschalen zueinander mehr oder weniger einführbar ist, daß die Einrichtungen zur Blockierung der Neigung der beiden Halbschalen zueinander durch zwei jeweils zu einer bogenförmigen Randleiste gehörigen und seitlich an jeden bogenförmigen Ausschnitt grenzende Flanken (4a, 5b) und von Elementen zum Festspannen der Flanken auf dem in den bogenförmigen Ausschnitt eingreifenden Teil des Schnabels gebildet sind, wobei jedes Spannelement aus einem Bolzen besteht, dessen zu einer Flanke (1c) gehörige Schraube (12) am Ende eine Stellmutter (13) mit Knopf trägt und über ein kreisbogenförmiges Langloch (11a) mit Zentrum auf der Anlenkachse (3) durch den Schnabel (10) geht, und daß die Schraube (12) mit der Mutter (13) den Dorn bzw. das Element zur Befestigung der Verbindungsklemme (20) bildet.

6. Sitz nach einem der Ansprüche 4 und 5, dadurch gekennzeichnet, daß der Gewindedorn (12) eine Länge aufweist, die höchstens gleich ist der Länge des vom Schwingarm (21) getragenen Dorns (22).

7. Sitz nach Anspruch 5, dadurch gekennzeichnet, daß eine der in den Randleisten (2b, 2c) vorgesehenen Öffnungen von einem Ende des kreisbogenförmigen Langlochs (11a) gebildet ist.

8. Sitz nach Anspruch 7, dadurch gekennzeichnet, daß er eine dritte Öffnung (25) zur Verriegelung der Neigung der Rücklehne in einer Zwischenposition zwischen den beiden Minimal- bzw. Maximalöffnungspositionen aufweist.

9. Sitz nach Anspruch 5, dadurch gekennzeichnet, daß die Anlenkachse (3) der beiden Halbschalen zweigeteilt ist, wobei jeder Teil nach unten ragende Verlängerungen (4c, 5c) der Flanken und einen zwischen den Verlängerungen angeordneten Teil jeder Randleiste der anderen Halbschale durchsetzt.

**Claims**

1. Reclinable safety seat for supporting and holding a child, designed to be fitted in a motor vehicle by means of two straps adapted to be respectively stretched between a fastening point provided in the vehicle and an anchoring point found on the seat, the end (19) of each strap being provided with a tab (20) for its attachment to the anchoring point, the back-rest (2) and the seating portion (1) which comprise side walls (2b, 2c, 1b, 1c) being hinged together by one of their ends, characterized in that the back-rest (2) and the seating portion (1) are each constituted by a half-shell having the overall shape of a trough with side walls (2b, 2c, 1b, 1c), in that the said anchoring point is situated on one of the said walls adjacent the hinged connection, and in that the said attachment tab (20) comprises rigid means for coupling the corresponding side wall of the back-rest to the corresponding side wall of the seating portion for at least two maximum and minimum reclining positions of the seat, the said tab (20) being fastenable to the said anchoring point only when the said coupling means are operated and lock the seat in at least the said two reclining positions.

2. Seat as claimed in claim 1, characterized in that the said coupling means are constituted by a link-rod (21) integral with the attachment tab (20) which can be extended to overlap laterally, the adjacent parts of the side walls of the back-rest (2b, 2c) and of the seating portion (1b, 1c), corresponding means for connecting (11, 12, 22, 23, 24), the link-rod on the said walls being provided on the said link-rod (21) and walls (2b, 2c, 1b, 1c) when the seat is at least in each of the said two maximum and minimum reclining positions.

3. Seat as claimed in claim 2, characterized in that the said connecting elements (11, 12, 22, 23, 24) are constituted by a pin (22) perpendicular to the said link-rod (21) provided at one of its ends and by an orifice (23) provided in the said link-rod at its other end and by at least two orifices (24, 11) provided on the part adjacent the hinged connection of one of the said walls (2c) and by a pin (12) integral with the second wall (1c) and perpendicular thereto.

4. Seat as claimed in claim 3, characterized in that the pin (12) integral with the said wall (1c) is threaded and constitutes one of the elements to secure the said attachment tab (20) on the said seat and is situated at the said anchoring point.

5. Seat as claimed in claim 4, characterized in that the part situated adjacent the hinged connection of each side wall of a half-shell (1, 2) is provided with a nose (10) adapted to more or less engage a corresponding indentation (9) made in the part situated adjacent the hinged connection of each side wall (2b, 2c, 1b, 1c) of the other half-shell according to a degree of relative inclination of the half-shells, and wherein the means for locking the relative inclination of the half-shells are constituted by two flanks (4a, 5b) integral with each of the indented walls and laterally bordering each indentation and by means for clamping the said flanks on the part of the said nose engaging the indentation, each of the said clamping means being constituted by a bolt whose screw (12) thread integral with one of the flanks (1c) carries at one end a control nut or knob (13) and traverses the said nose (10) via a hole in arc of circle (11a) centered on the axis (3) of the hinged connection, and wherein the said screw (12) thread constitutes with the nut (13) the said pin and the said element for fastening the said attachment tab (20).

6. Seat as claimed in any one of claims 4 and 5, characterized in that the said threaded pin (12) has a length at least equal to the length of the pin (22) carried by the link-rod (21).

7. Seat as claimed in claim 5, characterized in that one of the said orifices provided in the side walls (2b, 2c) is constituted by one end of the said hole (11a) in arc of circle.

8. Seat as claimed in claim 7, characterized in that it's provided with a third orifice (25) for the locking of the back-rest inclination in an intermediate position between the said two maximum and minimum reclining positions.

9. Seat as claimed in claim 5, characterized in that the axis of the hinged connection (3) of the two half-shells is in two parts, each one traversing lower extensions (4c, 5c) of the said flanks and a portion of each side wall of the other half-shell placed between the said extensions.

Fig.1

Fig. 2

Fig. 3

2c

19 20 22 24 4a 1c

21 12

21a 8

13 3

21b 23 8

4

Fig. 4

2c

11

11a 4a

24 1c

19 20 22

12

13 21 23 3

Fig. 5